# EUROPÄISCHE PATENTSCHRIFT

(11) **EP 2 222 501 B1**
(45) Veröffentlichungstag und Bekanntmachung des Hinweises auf die Patenterteilung: **05.09.2012**
(21) Anmeldenummer: 08860454.1
(22) Anmeldetag: 12.12.2008
(51) Int. Cl.: B60N 2/48

(54) **CRASH-AKTIVE KOPFSTÜTZE**
CRASH-ACTIVE HEAD REST
APPUIE-TÊTE ACTIF EN CAS DE COLLISION

(30) Priorität: 12.12.2007 DE 102007060370; 25.04.2008 DE 102008020992; 05.11.2008 DE 102008055982
(43) Veröffentlichungstag der Anmeldung: 01.09.2010
(73) Patentinhaber: Johnson Controls GmbH, 51399 Burscheid (DE)
(72) Erfinder: GROSS, Bernd, 40764 Langenfeld (DE); WERNER, Hans-Georg, 40764 Langenfeld (DE); HESTERBERG, Joshua, 40822 Mettmann (DE); BHARAMBE, Sachin, 51379 Leverkusen (DE)
(74) Vertreter: Wolff, Felix
(86) Internationale Anmeldenummer: PCT/EP2008/010603
(87) Internationale Veröffentlichungsnummer: WO 2009/074340

(56) Entgegenhaltungen:
- EP-A- 1 193 114
- DE-A1- 10 109 162
- DE-A1-102004 008 815
- DE-U1- 20 321 462

## Beschreibung

Die vorliegende Erfindung betrifft eine Kopfstütze an einem Fahrzeugsitz mit einem Basisteil, das an zwei Haltestangen angeordnet ist und einem Kopfstützträgerteil, das bei einem Heckaufprall von einer Design- in Richtung des Kopfes eines Fahrzeugsitzinsassen in eine Sicherheitsstellung verlagerbar ist.

Diese gattungsgemäßen Kopfstützen, die als sogenannte Crash-aktive Kopfstützen bezeichnet werden, sind aus dem Stand der Technik, beispielsweise der DE 101 24 662 A1, der FR 2 898 308 A1, der DE 199 51 966 B4, der DE 296 14 238 U1, DE 101 42 625, der DE 102 08 620 C1, DE 103 02 778 A1, DE-A-101 09 162 sowie der DE 102 60 582 B3 bekannt. Sie müssen einem Sitzinsassen bei einem Heckaufprall Schutz für den Kopf, den Nacken und/oder den Rücken bieten. Dafür bewegt sich bei einem Crash die Kopfstütze insgesamt oder Teile davon in Richtung des Kopfes des Sitzinsassen. Außerdem ist es vorteilhaft, wenn zu Komfortzwecken der Abstand zwischen dem Kopf des Sitzinsassen und dem Vorderteil der Kopfstütze einstellbar ist, so dass der Sitzinsasse beispielsweise den Kopf an die Kopfstütze anlehnen kann. Die im Stand der Technik beschriebenen Kopfstützen sind jedoch vergleichsweise aufwendig, insgesamt zu groß und in ihrer Verletzungsverminderungswirkung verbesserbar.

Es ist deshalb die Aufgabe der vorliegenden Erfindung eine Kopfstütze zur Verfügung zu stellen, die die Nachteile des Standes der Technik nicht aufweist. Es ist außerdem die Aufgabe der vorliegenden Erfindung eine Kopfstütze zur Verfügung zu stellen, die Crash-aktiv ist und eine Komfortverstellung erlaubt.

Gelöst wird die Aufgabe durch eine Kopfstütze gemäß Anspruch 1.

Die erfindungsgemäße Kopfstütze weist ein Basisteil und ein Kopfstückträgerteil auf. Das Basisteil ist an mindestens einer Haltestange angeordnet. Bei dieser Haltestange handelt es sich vorzugsweise um ein U-förmig gebogenes Bauteil, das gute mechanische Eigenschaften und Vorteile für den Fall bietet, dass die Haltestange Teil eines Transformators ist. Sind zwei Haltestangen vorhanden, werden diese vorzugsweise durch ein elektrisch leitendes Kopplungselement miteinander verbunden, was ebenfalls Vorteile für den Fall bietet, dass die Haltestange Teil eines Transformators ist. Die Haltestange(n) wiederum ist/sind in der Regel in der Rückenlehne eines Fahrzeugsitzes befestigt. Zur Komfortverstellung ist die Kopfstütze meistens höhen- und/oder in ihrem Neigungswinkel verstellbar. Die Höhenverstellung kann durch eine Verschiebung der Kopfstütze relativ zu den Haltestangen und/oder durch eine Verschiebung der Haltestangen relativ zu der Rückenlehne erfolgen. Des weiteren weist die Kopfstütze ein Kopfstützträgerteil auf, das bei einem Heckaufprall von einer Design-, in Richtung des Kopfes eines Sitzinsassen, in eine Sicherheitsstellung verlagerbar ist. Zwischen dem Basisteil und dem Kopfstützträgerteil ist mindestens ein Hebel vorgesehen, dessen erstes Ende, vorzugsweise um eine Haltestange, drehbar, gelagert ist und dessen zweites Ende mit einem Gleitlager direkt oder indirekt an dem Kopfstützträgerteil angeordnet ist. Vorzugsweise weist die Vorrichtung zwei oder vier solcher Hebel auf. Bei der Verlagerung des Kopfstützträgerteils von der Design- in die Sicherheitsstellung vollführt der Hebel eine Drehbewegung und das Gleitlager bewegt sich translatorisch entlang des Kopfstützträgerteils. Diese Mimik ist sehr einfach und baut sehr flach. Das Kopfstützträgerteil Basisteil wird nur in einer Raumrichtung bewegt. Diese eine Raumrichtung muss nicht horizontal oder vertikal sein, sondern kann unter einem beliebigen Winkel im Raum angeordnet sein.

Gemäß einem weiteren oder einem bevorzugten Gegenstand der vorliegenden Erfindung, ist das Kopfstützträgerteil in einer Vielzahl von Sicherheitsstellungen verrastbar. Diese Ausführungsform der vorliegenden Erfindung hat den Vorteil, dass das Kopfstützträgerteil nicht eine bestimmte Sicherheitsstellung erreichen muss, bevor sie in dieser verrastet werden kann, sondern in einer Vielzahl von Sicherheitsstellungen verrasten kann, die sich alle zwischen der Designstellung und einer maximal möglichen Sicherheitsstellung befinden. Sollte es aufgrund von Platz- und/oder Zeitproblemen nicht möglich sein diese maximale Sicherheitsstellung zu erreichen, rastet das Kopfträgerteil selbststätig in einer anderen, zwischen Design- und maximaler Sicherheitsstellung liegenden, Sicherheitsstellung, ein, in der dann der Kopf des Sitzinsassen abgefangen wird. Diese Ausführungsform bietet einen wesentlich besseren Schutz gegen mögliche Verletzungen des Kopf-, Hals-, Nacken- und/oder Schulterbereichs des Fahrzeuginsassen, da das Kopfstutzträgerteil unter den Belastungen, die bei einem Heckcrash auftreten, nicht in die Designstellung zurückgedrückt werden kann

Erfindungsgemäß sind an dem Gleitlager Rastmittel angeordnet, die mit Rastmitteln an dem Kopfstützträgerteil in der Sicherheitsstellung rastend zusammenwirken. Bei der Verlagerung des Kopfstützträgerteils von der Design- in die Sicherheitsstellung bewegen sich die Rastmittel an dem Gleitlager relativ zu den Rastmitteln an dem Kopfstützträgerteil und verrasten in der Sicherheitsstellung, die das Kopfstützträgerteil erreicht hat, wenn der Kopf des Sitzinsassen gegen das Kopfstützträgerteil schlägt. Bei den Rastmitteln kann es sich um Kraft- und/oder Formschluss- aber auch um Reibschlussmittel handeln. Vorzugsweise ist die Verrastung in der jeweiligen Sicherheitsstellung reversibel, so dass das Kopfstützträgerteil nach dem Crash wieder in seine Designstellung überführt werden kann.

Weiterhin bevorzugt weist die Kopfstützte ein Mittel auf, das das rastende Zusammenwirken der Rastmittel zumindest in der Designstellung, vorzugsweise auch bei deren Verlagerung in die jeweilige Sicherheitsstellung verhindert. Bei diesem Mittel kann es sich beispielsweise um ein Federmittel, insbesondere eine Blattfeder, handeln, die das Rastmittel des Gleitstücks von dem Rastmittel des Köpfstützträgerteils wegdrückt. Sobald der Kopf des Sitzinsassen gegen das Kopfstützträgerteil schlägt, wird das Rastmittel des Kopfstützträgerteils gegen die Federkraft mit dem Rastmittel des Gleitlagers in Eingriff gebracht, so dass deren Verrastung erfolgt. Nach dem Crash drückt die Feder die Rastmittel vorzugsweise wieder auseinander und eine Überführung des Kopfstützträgerteils in die Designstellung kann erfolgen.

Vorzugsweise sind die Hebel in Richtung der Sicherheitsstellung, beispielsweise mit einer Schenkel- oder einer Doppelschenkelfeder, vorgespannt.

Vorzugsweise weist die erfindungsgemäße Kopfstütze ein Verriegelungsmittel auf, das das Kopfstützträgerteil bei Normalbetrieb des Kraftfahrzeuges in seiner Designstellung hält. Besonders bevorzugt weist sie zusätzlich ein Entriegelungsmittel auf, das mit dem Verriegelungsmittel zusammenwirkt und das Kopfstützträgerteil bei einem Crash entriegelt. Bei dem Entriegelungsmittel kann es sich um ein elektrisch/elektronisches, mechanisches, mechatronisches und/oder pyrotechnisches Bauteil handeln.

In einer bevorzugten Ausführungsform der vorliegenden Erfindung ist das Entriegelungsmittel mechanisch, elektrisch und/oder drahtlos ansteuerbar. Ein Beispiel für eine mechanische Ansteuerung ist ein Zug- oder Druckübertragungsmittel, beispielsweise ein Bowdenzug, der vorzugsweise durch die Haltestangen der Kopfstütze geführt wird und beispielsweise mit einem Aktuator, der sich in der Rückenlehne des Fahrzeugsitzes befindet, angetrieben wird. Das Zug oder Druckübertragungsmittel kann auch die für die Verlagerung des Kopfstützträgerteils benötigte Energie zur Verfügung stellen. Ein elektrisches Ansteuerungsmittel ist beispielsweise ein elektrisch leitender Draht, der vorzugsweise ebenfalls durch die Haltestangen der Kopfstütze geführt wird und der auch die für die Verlagerung des Kopfstützträgerteils benötigte Energie zur Verfügung stellen kann. Das elektrische Ansteuerungsmittel kann beispielsweise einen Motor, einen Elektromagneten und/oder einen Pyroaktuator aktivieren und/oder antreiben. Eine drahtlose Ansteuerung erfolgt über ein drahtlos übertragenes Signal, vorzugsweise ein digitales Signal, von einem Crash-Sensor abgesetzt. Dieses Signal wird von einem Empfänger, der sich vorzugsweise in der Kopfstütze befindet empfangen. Dieses Signal wird dann an das Entriegelungsmittel weitergeleitet.

Vorzugsweise weist die Kopfstütze einen Energiespeicher, beispielsweise eine Batterie, zum Betrieb des Entriegelungsmittel auf. Insbesondere handelt es sich um einen wiederaufladbaren Akku.

In einer weiteren bevorzugten Ausführungsform wird die zum Betrieb des Empfängers und/oder zum Antrieb des Entriegelungsmittels benötigte Energie und/oder die Steuerungssignale über einen Transformator zur Verfügung gestellt. Vorzugsweise fungiert dabei mindestens eine der Haltestangen der Kopfstütze als elektrisch leitender, vorzugsweise metallischer, Kern des Transformators.

Vorzugsweise ist eine Spule, die Sekundärspule, des Transformators in der Kopfstütze und eine Spule, die Primärspule, im Bereich der Rückenlehne des Fahrzeugsitzes angeordnet, wobei die Haltestange vorzugsweise zumindest bezüglich der letzteren Spule verschieblich angeordnet ist.

In die Spule im Bereich der Rückenlehne wird vorzugsweise die zum Betrieb des Empfängers und/oder zum Antrieb des Entriegelungsmittels benötigte Energie, vorzugsweise in Form von Wechselstrom, eingespeist. Besonders bevorzugt wird auch im Falle eines Crashs das Signal für den Empfänger in diese Spule eingespeist und von der anderen Spule an den Empfänger weitergeleitet.

Vorzugsweise befindet zwischen der Spule in der Kopfstütze und dem Empfänger und/oder einem Akku ein Gleichrichter, der den Wechselstrom in Gleichstrom umwandelt.

Gemäß einem weiteren oder einem bevorzugten Gegenstand der vorliegenden Erfindung, weist die Kopfstütze mindestens einen, vorzugsweise zwei oder vier Hebel auf, der/die zur Komfortverstellung einer Kopfstützenvorderseite vorgesehen ist/sind. Mit diesem/diesen Hebel(n) kann die Anlagefläche des Kopfes des Sitzinsassen in Richtung des Sitzinsassen und davon wegbewegt werden. Die Verstellung erfolgt beispielsweise manuell oder motorisch. Vorzugsweise erfolgt die Verstellung zumindest zum Kopf des Sitzinsassen hin schrittweise.

Bei zwei Hebeln sind diese vorzugsweise gegensinnig drehend vorgesehen. Vorzugsweise sind die Hebel im Randbereich der Kopfstütze drehend gelagert.

Vorzugsweise weist mindestens ein besonders bevorzugt jeder Hebel einen Rastmechanismus auf, der am meisten bevorzugt nur in eine Bewegungsrichtung wirkt. Insbesondere verhindert der Rastmechanismus eine selbsttätige Bewegung der Anlagefläche des Kopfes von diesem weg. Eine Bewegung der Anlagefläche zum Kopf des Sitzinsassen hin wird hingegen vorzugsweise von dem Rastmechanismus nicht verhindert.

Vorzugsweise ist das Rastmittel mit einem Lösemechanismus versehen. Wird dieser aktiviert, kann die Anlagefläche in die vorher blockierte Richtung bewegt werden.

Ein weiterer Gegenstand der vorliegenden Erfindung ist ein Fahrzeugsitz aufweisend die erfindungsgemäße Kopfstütze.

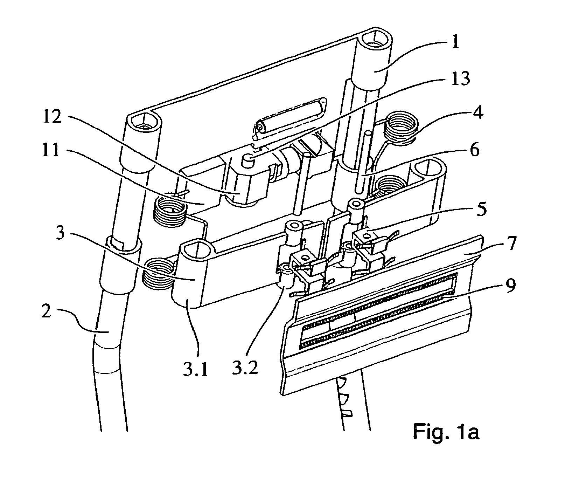

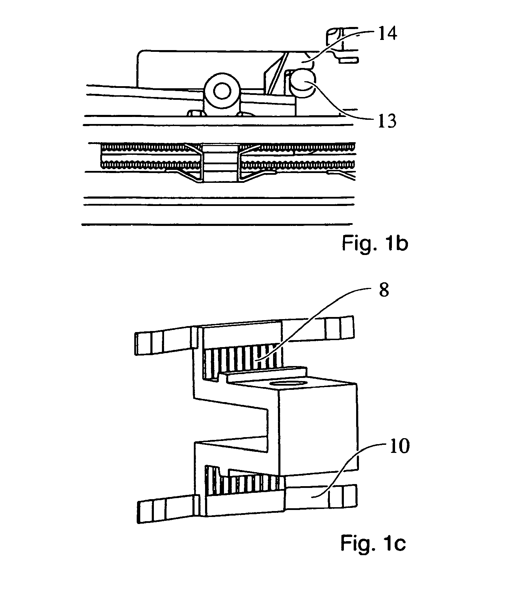

Im Folgenden wird die Erfindung anhand der Figuren 1 bis 11 erläutert. Diese Erläuterungen sind lediglich beispielhaft und schränken den allgemeinen Erfindungsgedanken nicht ein. Diese Erläuterungen gelten für alle Erfindungsgegenstände gleichermaßen.
- Figur 1a: zeigt eine Ausführungsform der erfindungsgemäßen Kopfstütze.
- Figur 1 b: zeigt das Verriegelungsmittel
- Figur 1 c: zeigt das Gleitlager
- Figur 2: zeigt eine weitere Ausführungsform des Entriegelungsmittels
- Figur 3: zeigt die erfindungsgemäße Kopfstütze mit einem Transformator
- Figur 4a, 4b: zeigen die Aktuierung des Entriegelungsmittels mit einem Bowdenzug
- Figuren 5-7: zeigen noch eine Ausführungsform der erfindungsgemäßen Kopfstütze.
- Figuren 8-10: zeigen noch eine weitere Ausführungsform der erfindungsgemäßen Kopfstütze.
- Figur 11: zeigt eine Gesamtdarstellung der erfindungsgemäßen Kopfstütze.

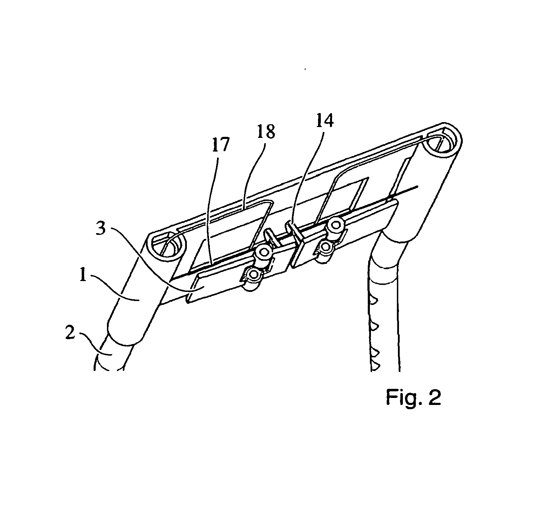

Die erfindungsgemäße Kopfstütze weist ein Basisteil 1 auf, das hier zur formschlüssigen Aufnahme von zwei Haltestangen 2 ausgebildet ist. Die Haltestangen 2 sind wiederum in bekannter Weise an der Rückenlehne eines Fahrzeugsitzes angeordnet. Des weiteren weist die Kopfstütze ein Kopfstützträgerteil 7 auf, das in der Regel mit einer Polsterung versehen ist und bei einem Heck-Crash von einer Design- in Richtung des Kopfes des Sitzinsassen in eine Sicherheitsstellung überführbar ist. Zwischen dem Basisteil 1 und dem Kopfstützträgerteil 7 sind zwei Hebel 3 angeordnet, wobei dessen erstes Ende 3.1 jeweils drehbar an einer Haltestange 2 gelagert ist und deren zweites Ende 3.2 über einen Stift 6 einem Gleitstück 5 scharnierartig verbunden ist. In der Designstellung sind die Hebel 3 im Wesentlichen parallel zu dem Basisteil angeordnet. Weiterhin ist an jeder Haltestange 2 eine Schenkelfeder angeordnet, deren eines Ende sich jeweils an dem Basisteil 1 und deren anderes Ende sich jeweils an einem Hebel 3 abstützt und somit die Hebel in Richtung der Sicherheitsstellung vorspannt. An dem zweiten Ende 3.2 jedes Hebels 3 ist ein Rasthaken 14 vorgesehen, der die beiden Hebel, beispielsweise unter Zuhilfenahme eines Drahtes in der Designstellung halten. Die Sicherung der Hebel bzw. der Entsicherung wird genauer anhand der Figuren 1b und 2 erläutert. Beim Übergang der Hebel 3 von der Design- in eine Sicherheitsstellung drehen sich die Hebel 3 um die Haltestangen 2, der linke Hebel im, der rechte Hebel gegen den Uhrzeigersinn. Die Gleitstücke 5 machen dabei eine translatorische Bewegung von der Mitte des Kopfstützträgerteils 7 in Richtung von deren Rändern. Wie insbesondere Figur 1c entnommen werden kann, weisen die Gleitstücke 5 in ihrem dem Kopfstützträgerteil 7 zugewandten Teil Form- und/oder Kraftschlußmittel in Form einer Verzahnung auf. Diese Verzahnung wirkt mit einer Verzahnung zusammen, die an dem Kopfstützträgerteil 7 angeordnet ist. Das Zusammenwirken der beiden Verzahnungen verhindert, dass das Gleitstück die eingenommene Sicherheitsstellung wieder verlässt, insbesondere dann wenn der Kopf des Sitzinsassen bei einem Heckaufprall gegen das Kopfstützträgerteil 7 der Kopfstütze schlägt. Dadurch dass sich die Verzahnung an dem Kopfstützträgerteil 7 über einen langgestreckten Abschnitt erstreckt, kann das Gleitstück 5 in einer Vielzahl von Sicherheitsstellungen verrasten. Das Gleitstück 5 verrastet immer in der Stellung, die es gerade erreicht hat, wenn der Kopf des Sitzinsassen zurückschlägt. Um zu vermeiden, dass die beiden Verzahnungen schon in der Designstellung verrastend zusammenwirken ist an dem Gleitstück eine Blattfeder 10 angeordnet, die die Verzahnungen voneinander separiert. Diese separierende Wirkung wird auch noch während der Überführung in eine Sicherheitsstellung aufrecht erhalten und erst dann aufgehoben, wenn der Kopf des Sitzinsassen bei einem Heck-Crash in Kontakt mit dem Kopfstützträgerteil 7 kommt und die Blattfeder 10 so verformt, das die Verzahnungen in Eingriff gelangen.

Um bei einem Heck-Crash die Überführung in die Sicherheitsstellung einzuleiten weist die erfindungsgemäße Kopfstütze ein Entriegelungsmittel auf, das bei der Ausführungsform gemäß Figur 1 a ein Pyro-Aktuator 12 ist, der einen Auslösestift antreibt, der die Verriegelung der beiden Hebel in der Designstellung aufhebt. Dieser Aktuator 12 wird von einem Empfänger 11 ausgelöst, der ein digitales Signal empfängt, das beispielweise von einem Crash-Sensor gesendet wird, und dieses an den Aktuator 12 weiterleitet. Der Aktuator 12 und/oder der Empfänger 11 werden von einer Batterie oder einem Akku 15 gespeist.

In Figur 1b ist die Verriegelung jeder Hebel 3 in der Designstellung detailiert dargestellt. Der Rasthaken 14 wirkt mit einem Draht oder Stift an dem Pyroaktuator zusammen, der ein Aufklappen der Hebel 3 verhindert. Dieser Draht oder Stift wird bei einem Heckcrash von dem Auslösestift so in seiner Lage verändert, dass die Rasthaken 14 freigegeben werden.

In Figur 2 ist eine weitere Möglichkeit der Entriegelung dargestellt. Bei einem Heckcrash wird mit dem Stromkabel 18 ein Stromstoß auf das Drahtelement 17 gegeben, dessen Energie so bemessen ist, dass dieser innerhalb von vorzugsweise 2 - 5 ms ähnlich einer Schmelzsicherung durchtrennt wird und die Rasthaken 14 freigibt.

Der Fachmann erkennt, dass die Entriegelung auch mechanisch beispielsweise über einen Bowdenzug oder über ein Funksignal, das der Empfänger empfängt erfolgen kann. Das Signal kann Ultraschall, ein niederfrequentes- oder hochfrequentes Signal sein, das vorzugsweise digital codiert ist. Weiterhin kann die Entriegelung auch über ein mit einem Lichtleiter transportierten Signal ausgelöst werden.

Weiterhin versteht der Fachmann, dass der Pyroaktuator direkt an eine Signalquelle angeschlossen sein kann, wobei der Pyroaktuator gegebenenfalls an eine zusätzliche Energiequelle angeschlossen ist.

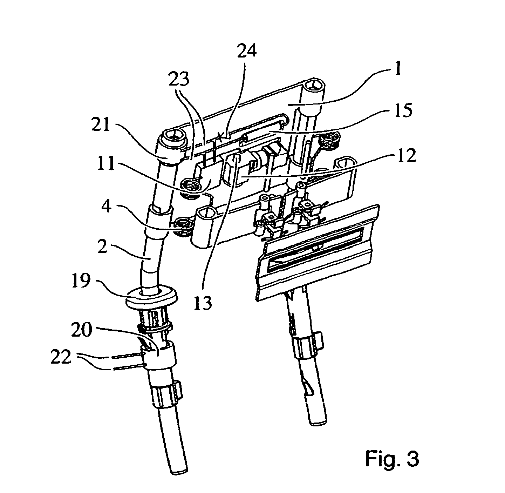

Figur 3 zeigt eine weitere Ausführungsform der erfindungsgemäßen Kopfstütze. Diese weist eine Primärspule 20 und eine Sekundärspule 21 auf. Die Primärspule 20 ist innerhalb der Rückenlehne vorzugsweise unterhalb der Haltestangenführung 19 angeordnet. Die zweite Spule 21 ist im oberen Bereich an der Haltestange 2 vorzugsweise fest angeordnet, insbesondere dort, wo sich das Basisteil 1 befindet. Die Haltestange 2 ist vorzugsweise relativ zu der Spule 20 verschiebbar, um eine Höheneinstellung der Kopfstütze zu ermöglichen. Die erste Spule 20 wirkt in dem vorliegenden Fall als Primärspule und die zweite Spule 21 als Sekundärspule eines Transformators, wobei der Trafokern die Haltestange 2 ist. Die Primärspule 20 ist über die elektrischen Anschlüsse 22 mit einer Wechselstromquelle verbunden. Über die elektrische Verbindung 22 wird auch im Falle eines Heck-Crashs das Signal zur Auslösung des Aktuators 12 eingespeist. Die Sekundärspule des Transformators ist über die Leitung 23 mit einem Gleichrichter 24 verbunden, der mit dem Gleichstrom den Akku 15 lädt. Des weiteren führen die Leitungen 23 zu dem Empfänger 11, der das Crash-Signal erhält und den Aktuator 12 auslöst, der seine Antriebsenergie aus dem Akku 15 bezieht. Die Wechselspannung liegt an den Leitungen 22 an, sobald der Motor des Fahrzeuges, in dem sich der jeweilige Sitz befindet, gestartet wird.

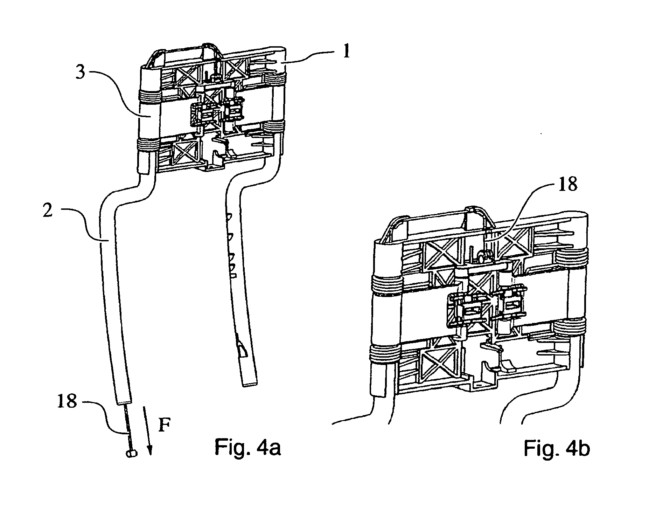

Figuren 4a und 4b zeigen die Entriegelung der Hebel 3 mit einem Bowdenzug 18. Dieser Bowdenzug wird durch eine der Haltestangen 2 geführt, im oberen Bereich des Basisteils 1 umgelenkt und dann zu einem Entriegelungsmittel geführt, das die beiden Hebel 3 entriegelt, so dass diese in die Sicherungsstellung überführt werden können.

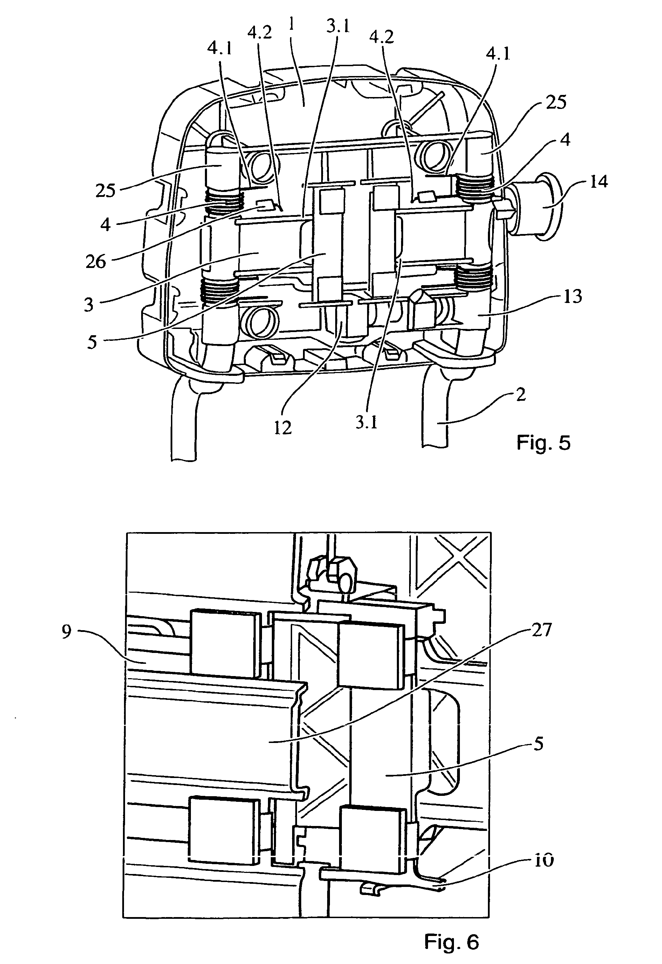

Wie aus Figur 5 ersichtlich, weist die Kopfstütze eine Trägerplatte 1 auf, die mit zwei Haltestangen 2 verbunden ist, die an der Rückenlehne eines Fahrzeugsitzes (nicht dargestellt) angeordnet sind. Vorzugsweise weist die Trägerplatte dafür für jede Haltestange jeweils zwei Aufnahmen 25 auf, die die Haltestangen 2 form- und/oder kraftschlüssig umschließen.

Auf jeder Haltestange 2 ist jeweils ein Hebelelement 3 drehbar gelagert. Des Weiteren ist an jeder Haltestange 2 auch ein Federmittel 4, hier eine Doppelschenkelfeder gelagert.

Das freie Federende 4.1 jeweils einer Schenkelfeder 4 stützt sich an der Trägerplatte 1 ab, das andere freie Federende 4.2 wird von einem Entriegelungselement 26 in einer Position gehalten, in dem es im Wesentlichen parallel zu der Trägerplatte ausgerichtet ist.

Das Entriegelungselement 26 wirkt vorzugsweise mit beiden Federenden 4.2 zusammen. Dafür ist es vorzugsweise spiegelsymmetrisch über die Mitte der Kopfstütze angeordnet. Mit Hilfe eines Aktuators, beispielsweise eines Pyro-Aktuators 12, kann das Entriegelungselement 26 im Falle eines Heck-Aufpralls von den Federenden 4.2 wegbewegt, beispielsweise nach unten gezogen werden und die vorgespannten Schenkelfedern 4 freigeben werden. Das freie Federende 4.2 drückt dann den Hebel 3 aus der Papierebene heraus, in Richtung des Kopfes des Sitzinsassen.

Auf der Innenseite 3.1 der Hebel 3 wird jeweils ein Gleitstuck 5 mittels eines Schamierstiftes drehbar mit den Hebeln 3 verbunden. Die Gleitstücke 5 werden in Führungsnuten einer Vorderschale 27 geführt. Die Vorderschale, die in der Regel gepolstert und mit einem Bezug versehen ist, stellt die Anlagefläche für den Kopf des Sitzinsassen dar. Beim Ausfahren der Vorderschale in Richtung des Kopfes des Sitzinsassen bewegen sich die Gleitstücke von innen nach außen, d.h. zum Rand der Kopfstütze hin.

Wie in Figur 6 zu sehen, weisen die Gleitstücke 5 auf der Innenseite jeweils Arretiermittel, beispielsweise eine Verzahnung, auf, welche bei Krafteinleitung auf die Kopfstütze, beispielsweise bei der Rückwärtsbewegung und/oder Anlage des Kopfes, kraft- und/oder formschlüssig jeweils mit einem Arretiermittel 9, hier eine Verzahnung, an der Vorderschale 27 arretierend zusammenwirkt, so dass die Vorderschale in ihrer Position bleibt.

Die Gleitstücke 5 sind vorzugsweise zusätzlich mit Federelementen 10, beispielsweise angeformten Blattfederelementen, versehen, welche die Gleitstücke 5 in der nicht arretierenden Stellung halten, so dass die Vorderschale 27 bei Nichtanlage des Kopfes des Sitzinsassen, insbesondere bei der Vorwärtsbewegung der Vorderschale 27 von der Verzahnung 9 der Vorderschale 27 beabstandet ist.

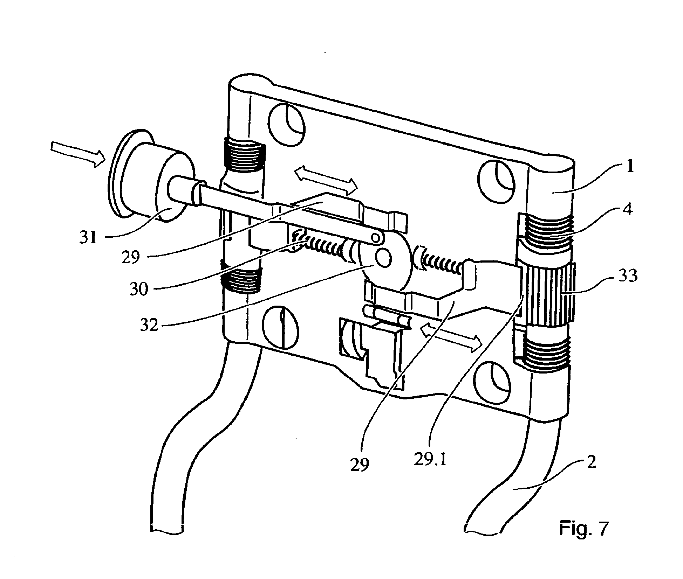

Die Komfortverstellung dieser erfindungsgemäßen Kopfstütze ist in Figur 7 dargestellt und erfolgt wie folgt:
Die beiden Hebelelemente 3 sind mit einer Sperrverzahnung 33 versehen. Diese ist jeweils mit einem Ende 29.1 einer Rastelement 29 im Eingriff, welches jeweils auf der Trägerplatte 1 gleitend gelagert ist. Ein Federelement 30 drückt das Rastelement 29 jeweils gegen die Sperrverzahnung 33. Durch diese Anordnung ist es möglich, die Kopfstütze in Raststufen von Hand nach vorne zu bewegen. Die Rückwärtsbewegung ist blockiert. Durch Betätigung einer Drucktaste 31 wird eine Steuerscheibe 32 verdreht. Zwei an der Steuerscheibe angebrachte Nocken ziehen dabei die beiden Rastelemente 29 nach innen, von der Sperrverzahnung 33 weg. Dadurch kann die Kopfstütze in die Ausgangsstellung zurückbewegt werden.

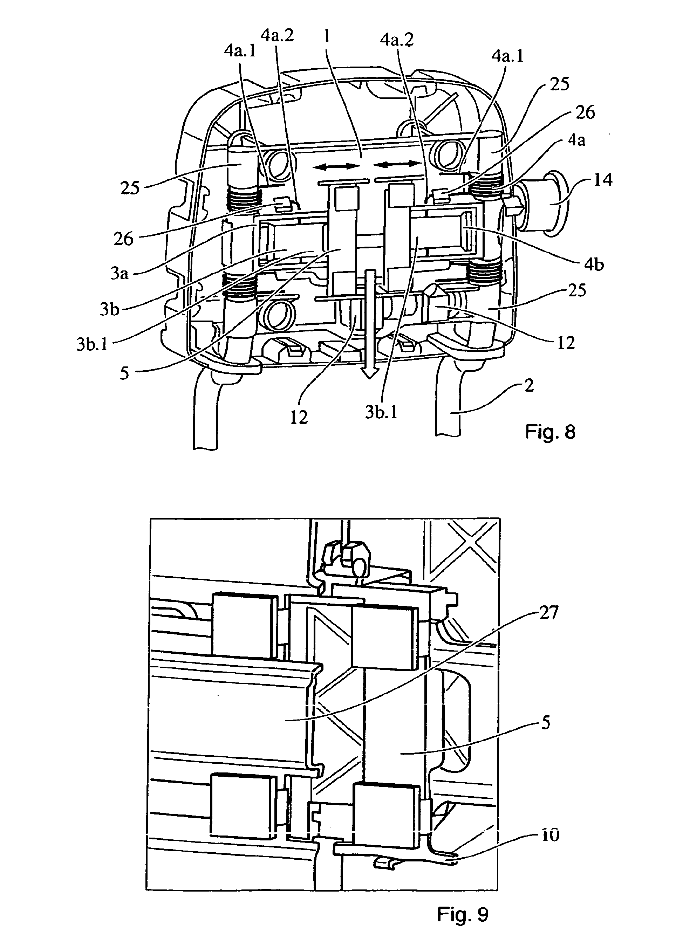

Die Figuren 8 - 10 zeigen eine weitere Ausführungsform der erfindungsgemäßen Kopfstütze.

Wie aus Figur 8 ersichtlich, weist die Kopfstütze eine Trägerplatte 1 auf, die mit zwei Haltestangen 2 verbunden ist, die an der Rückenlehne eines Fahrzeugsitzes (nicht dargestellt) angeordnet sind. Vorzugsweise weist die Trägerplatte dafür für jede Haltestange jeweils zwei Aufnahmen 25 auf, die die Haltestangen 2 form- und/oder kraftschlüssig umschließen.

An den Haltestangen 2 ist jeweils ein Doppel-Hebelelemente drehbar gelagert, bestehend aus einem Außen-Hebel 3a und einem Innen-Hebel 3b. Der Innenhebel 3b ist vorzugsweise mit einem Drehmittel, beispielsweise einem Scharnierstift, an dem Außenhebeln 3a drehbar gelagert. Der Innenhebel 3b kann jedoch auch an den Haltestangen 2 drehbar gelagert werden. Jeweils ein Federmittel, hier eine Doppelschenkelfeder 4a ist gemeinsam mit den Außen-Hebeln 3a an der Haltestange gelagert.
Ein Federmittel, hier eine Schenkelfeder, 4b, das sich an dem Außen-Hebel 3a und dem Innen-Hebel 3b abstützt, hält den Innen-Hebel 3b in einer Grundstellung, in der er parallel zu dem Außen-Hebel 3a angeordnet ist.

Die äußeren Schenkel 4a.1 eines weiteren Federmittels 4a, hier eine Doppelschenkelfedern, stützen sich an der Trägerplatte 1 ab und die inneren U-förmigen Bügel 4a.2 der Feder 4a werden von einem Entriegelungselement 26 in einer Position gehalten, in der sich der Bügel im Wesentlichen parallel zu der Trägerplatte 1 erstreckt.
Das Entriegelungselement 26 wirkt vorzugsweise mit beiden Federenden 4a.2 zusammen. Dafür ist es vorzugsweise spiegelsymmetrisch über die Mitte der Kopfstütze angeordnet Mit Hilfe eines Aktuaters, beispielsweise eines Pyro-Aktuators, 12 kann das Entriegelungselement 26 im Falle eines Heck-Aufpralls von den Federenden 4a.2 wegbewegt, beispielsweise nach unten gezogen werden und die vorgespannten Schenkelfedern 4a freigeben werden. Das freie Federende 4a.2 drückt dann den Hebel 3a aus der Papierebene heraus, in Richtung des Kopfes des Sitzinsassen.
Auf der Innenseite 3b.1 der Hebel 3b wird jeweils ein Gleitstuck 5 mittels eines Schamierstiftes drehbar mit den Hebeln 3b verbunden. Die Gleitstücke 5 werden in Führungsnuten einer Vorderschale 27 geführt. Die Vorderschale, die in der Regel gepolstert und mit einem Bezug versehen ist, stellt die Anlagefläche für den Kopf des Sitzinsassen dar. Beim Ausfahren der Vorderschale in Richtung des Kopfes des Sitzinsassen bewegen sich die Gleitstücke von innen nach außen, d.h. zum Rand der Kopfstütze hin.

Wie in Figur 9 zu sehen, weisen die Gleitstücke 5 auf der Innenseite jeweils Arretiermittel, beispielsweise eine Verzahnung, auf, welche bei Krafteinleitung auf die Kopfstütze bei der Rückwärtsbewegung des Kopfes kraft- und formschlüssig jeweils mit einem Arretiermittel 9, hier eine Verzahnung, an der Vorderschale 27 arretierend zusammenwirkt, so dass die Vorderschale in ihrer Position bleibt.
Die Gleitstücke 5 sind vorzugsweise zusätzlich mit Federelementen 10, beispielsweise angeformten Blattfederelementen, versehen, welche die Gleitstücke 5 in der nicht arretierenden Stellung halten, so dass die Vorderschale 27 bei Nichtanlage des Kopfes des Sitzinsassen, insbesondere bei der Vorwärtsbewegung der Vorderschale 27 von der Verzahnung 9 der Vorderschale 27 beabstandet ist.

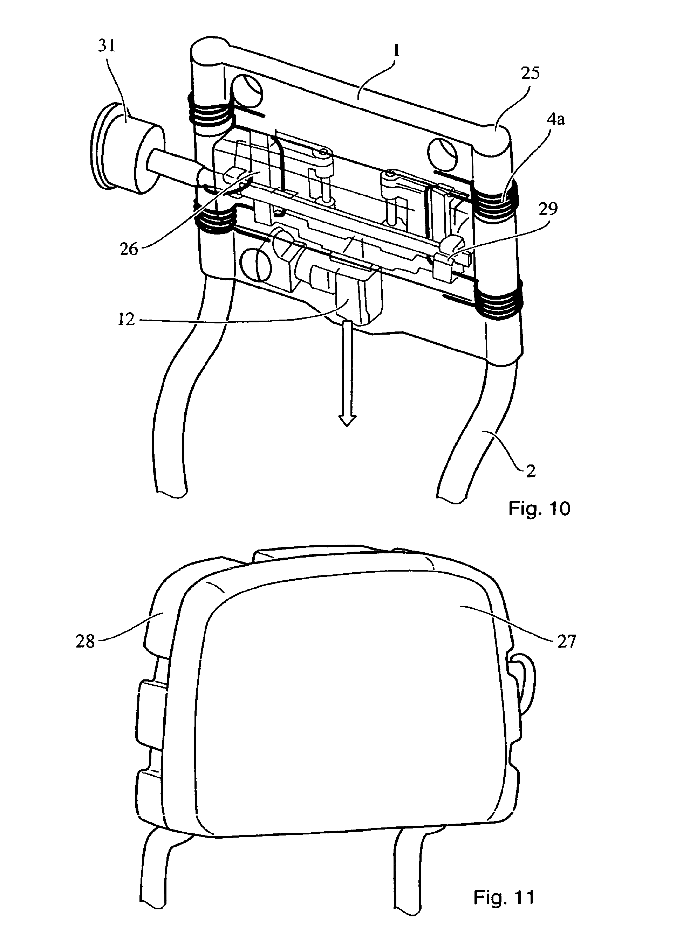

Die Komfortverstellung dieser erfindungsgemäßen Kopfstütze ist in Figur 10 dargestellt und erfolgt wie folgt:
Die Innenhebel 3b sind jeweils mit einer Sperrverzahnung versehen. Diese ist im Eingriff mit einem Rastelement 29 welches auf der Trägerplatte 1 gelagert ist. Ein Federelement drückt das Rastelement gegen die Sperrverzahnung. Durch diese Anordnung ist es möglich, die Kopfstütze in Raststufen von Hand nach vorne zu bewegen. Die Rückwärtsbewegung ist blockiert. Durch Betätigung einer Drucktaste 31 werden die Rastelemente 29 aus dem Eingriff mit der Sperrverzahnung der Innenhebel 3b gezogen. Dadurch kann die Kopfstütze in die Ausgangsstellung zurückbewegt werden.

Figur 11 zeigt eine Gesamtdarstellung der erfindungsgemäßen Kopfstütze.

### Bezugszeichenliste:

- 1: Basisteil, Versteifung, Trägerplatte
- 2: Haltestange
- 3: Hebel
- 3a: Außenhebel
- 3b: Innenhebel
- 3.1,3b.1: erstes Ende des Hebels, Innenseite der Hebel
- 3.2: zweites Ende des Hebels
- 4, 4a, 4b: Kraftspeicher, Federmittel, Doppelschenkelfeder, Schenkelfeder
- 4.1, 4a.1: freies Federende, äußerer Schenkel
- 4.2, 4a.2: freies Federende, U-förmiger Bügel
- 5: Gleitlager, Gleitstück
- 6: Scharniermittel, Scharnierstift
- 7: Kopfstützträgerteil, Kopfstützträgerplatte, entspricht Teil 27
- 8: Rastmittel, Verzahnung
- 9: Rastmittel, Verzahnung, Arretiermittel
- 10: Mittel, Feder, Blattfeder
- 11: Empfänger
- 12: Aktuator, Pyroaktuator
- 13: Entriegelungsmittel, Auslösestift
- 14: Verriegelungsmittel, Rasthaken
- 15: Energiespeicher, Batterie, Akku
- 17: Verriegelungsmittel, Draht
- 18: Entriegelungsmittel, elektrischer Leiter, Bowdenzug
- 19: Haltestangenführung
- 20: erste Spule, Primärspule
- 21: zweite Spule, Sekundärspule
- 22: elektrische Verbindung der Primärspule
- 23: elektrische Verbindung der Sekundärspule
- 24: Gleichrichter
- 25: Aufnahme
- 26: Entriegelungselement
- 27: Vorderseite, Vorderschale, entspricht Teil 7
- 28: Hinterseite, Hinterschale
- 29: Rastelement
- 29.1: ein Ende des Rastelementes
- 30: Federelement
- 31: Betätigungsmittel, Drucktaster
- 32: Steuerscheibe
- 33: Sperrverzahnung

## Patentansprüche

1. Kopfstütze an einem Fahrzeugsitz mit einem Basisteil (1), das an mindestens einer Haltestange (2) angeordnet ist und einem Kopfstützträgerteil (7), das bei einem Heckaufprall von einer Design- in Richtung des Kopfes eines Fahrzeugsitzinsassen in eine Sicherheitsstellung verlagerbar ist und die zwei Hebel (3) aufweist, deren erstes Ende (3.1) drehbar um die Haltestange (2) gelagert ist und dessen zweites Ende (3.2) mit einem Gleitlager (5) direkt oder indirekt an dem Kopfstützträgerteil (7) angeordnet ist, **dadurch gekennzeichnet, dass** an dem Gleitlager (5) Rastmittel (8) angeordnet sind, die mit Rastmitteln (9) an dem Kopfstützträgerteil (7) in der Sicherheitsstellung rastend zusammenwirken.

2. Kopfstütze nach Anspruch 1, **dadurch gekennzeichnet, dass** das Kopfstützträgerteil (7) in einer Vielzahl von Sicherheitsstellungen verrastbar ist.

3. Kopfstütze nach Anspruch 1, **dadurch gekennzeichnet, dass** sie ein Mittel (10) aufweist, das das rastende Zusammenwirken der Rastmittel (8, 9) zumindest in der Designstellung, vorzugsweise auch bei deren Verlagerung in die Sicherheitsstellung verhindert.

4. Kopfstütze nach einem der voranstehenden Ansprüche, **dadurch gekennzeichnet, dass** die Hebel (3) in Richtung der Sicherheitsstellung vorgespannt sind.

5. Kopfstütze nach einem der voranstehenden Ansprüche, **dadurch gekennzeichnet, dass** sie Verriegelungsmittel (14, 17) aufweist, das das Kopfstützträgerteil (7) in seiner Designstellung hält.

6. Kopfstütze nach Anspruch 5, **dadurch gekennzeichnet, dass** sie ein Entriegelungsmittel (13, 18) aufweist, das mit dem Verriegelungsmittel (14, 17) zusammenwirkt und das Kopfstützträgerteil (7) entriegelt.

7. Kopfstütze nach Anspruch 6, **dadurch gekennzeichnet, dass** das Entriegelungsmittel (13, 18) ein elektrisches, mechanisches, mechatronisches und/oder pyrotechnisches Bauteil ist.

8. Kopfstütze nach Anspruch 6 oder 7, **dadurch gekennzeichnet, dass** das Entriegelungsmittel (13, 18) mechanisch, elektrisch und/oder drahtlos ansteuerbar ist.

9. Kopfstütze nach einem der Ansprüche 6 - 8, **dadurch gekennzeichnet, dass** sie einen Energiespeicher (15), vorzugsweise einen Akku zum Betrieb des Entriegelungsmittel (13, 18) und/oder eines Empfängers aufweist.

10. Kopfstütze nach einem der Ansprüche 6 - 9, **dadurch gekennzeichnet, dass** sie einen Empfänger (11) zum Ansteuern des Entriegelungsmittel (13, 18) aufweist.

11. Kopfstütze nach einem der voranstehenden Ansprüche, **dadurch gekennzeichnet, dass** die zum Betrieb des Empfängers und/oder zum Antrieb des Entriegelungsmittels benötigte Energie und/oder die Steuerungssignale über einen Transformator zur Verfügung stellbar ist.

12. Kopfstütze nach Anspruch 11, **dadurch gekennzeichnet, dass** mindestens eine der Haltestangen (2) der Kopfstütze als elektrisch leitender, vorzugsweise metallischer, Kern des Transformators fungiert.

13. Kopfstütze nach Anspruch 11 oder 12, **dadurch gekennzeichnet, dass** eine Spule (21), die Sekundärspule, des Transformators in der Kopfstütze und eine Spule (20), die Primärspule, im Bereich der Rückenlehne des Fahrzeugsitzes angeordnet ist.

14. Kopfstütze nach einem der voranstehenden Ansprüche, **dadurch gekennzeichnet, dass** die Hebel (3a, 3b) zur Komfortverstellung einer Kopfstützenvorderseite (27) vorgesehen ist/sind.

15. Kopfstütze nach Anspruch 14, **dadurch gekennzeichnet, dass** zwei Hebel (3a) und/oder zwei Hebel (3b) jeweils gegensinnig drehend vorgesehen sind.

16. Kopfstütze nach einem der Ansprüche 14 oder 15, **dadurch gekennzeichnet, dass** die Hebel (3a, 3b) einen Rastmechanismus (29, 33) aufweist, der vorzugsweise nur in eine Bewegungsrichtung wirkt.

17. Kopfstütze nach Anspruch 16, **dadurch gekennzeichnet, dass** das Rastmittel (29) mit einem Lösemechanismus (31) versehen ist.

18. Fahrzeugsitz aufweisend eine Kopfstütze gemäß einem der voranstehenden Ansprüche.

## Claims

1. Headrest on a vehicle seat, with a base part (1), which is arranged on at least one holding rod (2), and a headrest support part (7), which, in the event of a rear impact, is displaceable from a design position in the direction of a vehicle seat occupant's head into a safety position, and which headrest has two levers (3), the first end (3.1) of which is mounted so as to be rotatable about the holding rod (2) and the second end (3.2) of which is arranged with a sliding bearing (5) directly or indirectly on the headrest support part (7), **characterized in that** latching means (8) are arranged on the sliding bearing (5), the latching means interacting in a latching manner with latching means (9) on the headrest support part (7) in the safety position.

2. Headrest according to Claim 1, **characterized in that** the headrest support part (7) is latchable in a multiplicity of safety positions.

3. Headrest according to Claim 1, **characterized in that** the headrest has a means (10) which prevents the latching interaction of the latching means (8, 9) at least in the design position, and preferably also upon the displacement thereof into the safety position.

4. Headrest according to one of the preceding claims, **characterized in that** the levers (3) are prestressed in the direction of the safety position.

5. Headrest according to one of the preceding claims, **characterized in that** the headrest has locking means (14, 17) holding the headrest support part (7) in the design position thereof.

6. Headrest according to Claim 5, **characterized in that** the headrest has an unlocking means (13, 18) which interacts with the locking means (14, 17) and unlocks the headrest support part (7).

7. Headrest according to Claim 6, **characterized in that** the unlocking means (13, 18) is an electric, mechanical, mechatronic and/or pyrotechnic component.

8. Headrest according to Claim 6 or 7, **characterized in that** the unlocking means (13, 18) is activatable mechanically, electrically and/or wirelessly.

9. Headrest according to one of Claims 6-8, **characterized in that** the headrest has an energy accumulator (15), preferably a battery for operating the unlocking means (13, 18) and/or a receiver.

10. Headrest according to one of Claims 6-9, **characterized in that** the headrest has a receiver (11) for activating the unlocking means (13, 18).

11. Headrest according to one of the preceding claims, **characterized in that** the energy required for operating the receiver and/or for driving the unlocking means, and/or the control signals are providable via a transformer.

12. Headrest according to Claim 11, **characterized in that** at least one of the holding rods (2) of the headrest acts as an electrically conductive, preferably metallic, core of the transformer.

13. Headrest according to Claim 11 or 12, **characterized in that** a coil (21), the secondary coil, of the transformer is arranged in the headrest and a coil (20), the primary coil, is arranged in the region of the backrest of the vehicle seat.

14. Headrest according to one of the preceding claims, **characterized in that** the levers (3a, 3b) are provided for the comfort adjustment of a headrest front side (27).

15. Headrest according to Claim 14, **characterized in that** two levers (3a) and/or two levers (3b) in each case rotating in the opposite direction are provided.

16. Headrest according to either of Claims 14 and 15, **characterized in that** the levers (3a, 3b) have a latching mechanism (29, 33) which preferably acts only in one direction of movement.

17. Headrest according to Claim 16, **characterized in that** the latching means (29) is provided with a release mechanism (31).

18. Vehicle seat having a headrest according to one of the preceding claims.

## Revendications

1. Appuie-tête sur un siège de véhicule, comprenant une partie de base (1), qui est disposée sur au moins une tige de fixation (2) et une partie de support d'appuie-tête (7) qui, en cas de collision par l'arrière, peut être déplacée depuis une position de conception dans la direction de la tête d'un occupant du siège du véhicule dans une position de sécurité et présentant deux leviers (3), dont une première extrémité (3.1) est montée de manière rotative autour de la tige de fixation (2) et dont la deuxième extrémité (3.2) est disposée avec un palier lisse (5) directement ou indirectement sur la partie de support d'appuie-tête (7), **caractérisé en ce que** des moyens d'encliquetage (8) sont disposés sur le palier lisse (5), lesquels coopèrent avec des moyens d'encliquetage (9) sur la partie de support d'appuie-tête (7) en s'encliquetant dans la position de sécurité.

2. Appuie-tête selon la revendication 1, **caractérisé en ce que** à partie de support d'appuie-tête (7) peut être encliquetée dans une pluralité de positions de sécurité.

3. Appuie-tête selon la revendication 1, **caractérisé en ce qu'**il présente un moyen (10) qui empêche la coopération par encliquetage des moyens d'encliquetage (8, 9) au moins dans la position de conception, de préférence aussi lors de son déplacement dans la position de sécurité.

4. Appuie-tête selon l'une quelconque des revendications précédentes, **caractérisé en ce que** les leviers (3) sont précontraints dans la direction de la position de sécurité.

5. Appuie-tête selon l'une quelconque des revendications précédentes, **caractérisé en ce qu'**il présente un moyen de verrouillage (14, 17) qui retient la partie de support d'appuie-tête (7) dans sa position de conception.

6. Appuie-tête selon la revendication 5, **caractérisé en ce qu'**il présente un moyen de déverrouillage (13, 18) qui coopère avec le moyen de verrouillage (14, 17) et déverrouille la partie de support d'appuie-téte (7).

7. Appuie-tête selon la revendication 6, **caractérisé en ce que** le moyen de déverrouillage (13, 18) est un composant électrique, mécanique, mécatronique, et/ou pyrotechnique.

8. Appuie-tête selon la revendication 6 ou 7, **caractérisé en ce que** le moyen de déverrouillage (13, 18) peut être commandé mécaniquement, électriquement et/ou sans fil.

9. Appuie-tête selon l'une quelconque des revendications 6 à 8, **caractérisé en ce qu'**il présente un accumulateur d'énergie (15), de préférence un accumulateur pour faire fonctionner le moyen de déverrouillage (13, 18) et/ou un récepteur.

10. Appuie-tête selon l'une quelconque des revendications 6 à 9, **caractérisé en ce qu'**il présente un récepteur (11) pour commander le moyen de déverrouillage (13, 18).

11. Appuie-tête selon l'une quelconque des revendications précédentes, **caractérisé en ce que** l'énergie requise pour faire fonctionner le récepteur et/ou pour l'entraînement du moyen de déverrouillage et/ou les signaux de commande peuvent être fournis par le biais d'un transformateur.

12. Appuie-tête selon la revendication 11, **caractérisé en ce qu'**au moins l'une des tiges de fixation (2) de l'appuie-tête sert de noyau électriquement conducteur, de préférence métallique, du transformateur.

13. Appuie-tête selon la revendication 11 ou 12, **caractérisé en ce qu'**une bobine (21), la bobine secondaire, du transformateur est disposée dans l'appuie-tête et une bobine (20), la bobine primaire, est disposée dans la région du dossier du siège de véhicule.

14. Appuie-tête selon l'une quelconque des revendications précédentes, **caractérisé en ce que** le ou les leviers (3a, 3b) est/sont prévu(s) pour un réglage confortable d'un côté avant de l'appuie-tête (27).

15. Appuie-tête selon la revendication 14, **caractérisé en ce que** deux leviers (3a) et/ou deux leviers (3b) sont prévus de manière à tourner à chaque fois en sens inverse.

16. Appuie-tête selon l'une quelconque des revendications 14 ou 15, **caractérisé en ce que** le levier (3a, 3b) présente un mécanisme d'encliquetage (29, 33) qui agit de préférence seulement dans une direction de déplacement.

17. Appuie-tête selon la revendication 16, **caractérisé en ce que** le moyen d'encliquetage (29) est pourvu d'un mécanisme de desserrage (31).

18. Siège de véhicule présentant un appuie-tête selon l'une quelconque des revendications précédentes.
